# EUROPÄISCHE PATENTSCHRIFT

(11) **EP 1 960 246 B1**
(45) Veröffentlichungstag und Bekanntmachung des Hinweises auf die Patenterteilung: **03.03.2010**
(21) Anmeldenummer: 06775888.8
(22) Anmeldetag: 21.08.2006
(51) Int. Cl.: B62B 3/14

(54) **VON HAND BEWEGBARER TRANSPORTWAGEN**
MANUALLY MOVABLE TROLLEY
CHARIOT DE TRANSPORT DEPLAÇABLE MANUELLEMENT

(30) Priorität: 31.08.2005 DE 202005013736 U; 20.09.2005 DE 202005014825 U; 02.08.2006 DE 202006011849 U
(43) Veröffentlichungstag der Anmeldung: 27.08.2008
(73) Patentinhaber: Eifelwerk Heinrich Stein GmbH &Co.KG, 54655 Malbergweich (DE)
(72) Erfinder: EBERLEIN, Herbert, 89347 Bubesheim (DE)
(74) Vertreter: Maxton Langmaack & Partner
(86) Internationale Anmeldenummer: PCT/DE2006/001464
(87) Internationale Veröffentlichungsnummer: WO 2007/025508

(56) Entgegenhaltungen:
- DE-A1- 19 841 013
- DE-U1- 29 906 261
- FR-A- 1 125 063
- GB-A- 1 281 398
- US-A- 2 738 201
- US-A- 5 000 468

## Beschreibung

Die Erfindung betrifft einen von Hand bewegbaren Transportwagen, der in einen gleichen Transportwagen Platz sparend einschiebbar ist, mit einem mit vorderen Lenkrollen und mit hinteren Fahrrollen ausgestatteten Fahrgestell, das längsseitig zwei konvergierend angeordnete Rahmenteile sowie im vorderen Bereich des Fahrgestelles eine die Rahmenteile verbindende Strebe aufweist, mit einer im hinteren Bereich des Fahrgestelles vorgesehenen, an Stützen angeordneten Schiebeeinrichtung sowie mit einer vom Fahrgestell getragenen, zum Abstellen größerer Gegenstände bestimmten Plattform, die im vorderen Bereich breiter ist als die zuvorderst gemessene Breite des Fahrgestelles, wobei die Plattform entweder um eine im hinteren Bereich oder um eine im vorderen Bereich des Fahrgestelles befindliche, quer zur Schieberichtung des Transportwagens sich erstreckende horizontale Achse anhebbar am Fahrgestell gelagert ist und sich in einem Abstand zur horizontalen Achse mit Hilfe von Abstützstellen auf dem Fahrgestell abstützt und wobei ein nahe der Schiebeeinrichtung angeordneter, zur Aufnahme von kleineren Gegenständen bestimmter Korb vorgesehen sein kann. Einen derartigen Transportwagen zeigt die US 2,738,201 A.

Transportwagen dieser Art finden bevorzugt in sogenannten Baumärkten und Gartencentern Verwendung. Die in diesen Märkten angebotene Ware unterschiedlichster Form und Größe hat zur Entwicklung solcher Transportwagen geführt. Der wesentliche Unterschied zwischen diesen Transportwagen und den herkömmlichen, in SB-Geschäften befindlichen Einkaufswagen besteht darin, dass bei den Einkaufswagen der Korb das dominierende Element darstellt, während dies bei den eingangs genannten Transportwagen die Plattform ist. Die Plattform der bekannten Transportwagen ist so tief wie möglich angeordnet, damit nach oben viel Raum zum Aufladen großer Warenmengen verbleibt. Dies ist zweifelsohne ein Vorteil. Allerdings wird dieser Vorteil durch zwei entscheidende Nachteile erkauft. Der erste Nachteil besteht darin, dass der Kunde beim Kauf relativ schwerer Gegenstände, beispielsweise bei großen Packungen wie Sand-, Zement-, Humussäcken und dergleichen, diese erst auf eine für ihn zum Tragen günstige Höhe anheben muss, um sie dann wieder auf die niedrig gelegene Plattform absinken zu lassen. An der Kasse angekommen, kann sich der eben beschriebene Vorgang wiederholen. Die Packung muss von der Ladeplattform angehoben und auf das Förderband gelegt werden. Nach dem Kassiervorgang ist die Packung wieder auf die Plattform zu hieven. Am Auto angekommen muss die Packung erneut von der Ladeplattform abgehoben werden, um sie dann endlich im Auto verstauen zu können. Man hat diesen Nachteil erkannt und Kassentische entwickelt, die, ausgehend vom Platz der Kassierperson, zu jener Seite hin offen sind, die sich gegenüber dem Förderband befindet. Diese offene Seite führt zum Personendurchgang, der von den Kunden mitsamt dem Transportwagen zum Abrechnen der eingekauften Ware benutzt wird. Hat jemand schwere Ware geladen, ist es für die Kassierperson möglich, mit der Scannerpistole die auf dem Transportwagen verbliebene Ware zu erfassen. Doch auch hier zeigen sich erhebliche Mängel. Befindet sich die Ware ganz unten auf der Ladeplattform, muss sich die Kassierperson in umständlicher Weise aus ihrem Kassentisch heraus seitlich nach unten bücken, um die Ware einscannen zu können. Befindet sich dann der an der Ware befindliche Strichcode unglücklicherweise noch auf der anderen Seite, ist es aufgrund der schmalen Personendurchgänge fast unmöglich, die Ware mit der Scannerpistole zu erfassen. Die Folge ist, dass der Kunde beim Abrechnungsvorgang derart behilflich sein muss, dass er versucht, die schwere, auf der Plattform befindliche Ware zumindest in eine Position zu bringen, in der es möglich ist, den auf der Ware befindlichen Strichcode zu erfassen. All dies ist umständlich, zeitraubend, mühevoll und verhindert eine zügige Abrechnung der Ware. Die Wartezeiten an den Kassen vergrößern sich zum Unmut nachfolgender Kunden. Will man dies abstellen, ist ein verstärkter Personaleinsatz an den Kassen erforderlich.

Aus dieser Erkenntnis heraus sind inzwischen Transportwagen entwickelt worden, deren Plattform höher als bei den eben genannten Transportwagen angeordnet ist. Um diese höhere Lage der Plattform zu erreichen, weisen diese Transportwagen im vorderen Bereich des Fahrgestelles nach unten gerichtete, an den Rahmenteilen angeschweißte, in der Regel V- oder U-förmig gestaltete Stützelemente auf, an deren Unterseite die vorderen Fahrrollen befestigt sind. Als nachteilig ist zu werten, dass solche Stützelemente hergestellt und an die Rahmenteile angeschweißt werden müssen, was zwangsläufig die Herstellkosten solcher Transportwagen nicht unwesentlich erhöht und zudem diese Transportwagen schwerer macht, so dass zum Schieben solcher Wagen ein erhöhter Kraftaufwand erforderlich ist, ganz gleich, ob diese Transportwagen beladen oder unbeladen sind. Auch soll nicht unerwähnt bleiben, dass die Stützelemente dieser Wagen aufgrund ihrer Formgebung, beispielsweise als Blechteile gestaltet, sehr bald zur Verschmutzung neigen, so dass sich im Laufe der Zeit ein erhöhter Reinigungsaufwand ergibt.
Schließlich bleibt anzumerken, dass das Schieben der beschriebenen Transportwagen ganz allgemein dann erschwert wird, wenn es gilt, schwer beladene Transportwagen auf gepflasterten Parkplätzen zu bewegen. Aufgrund der dort anzutreffenden rillenartigen Bodenunebenheiten ist das Schieben und Rangieren dieser Wagen besonders mühsam.

Ausgehend von diesem Stand der Technik besteht die Aufgabe der Erfindung darin, einen Transportwagen der hier vorliegenden Art so weiterzuentwickeln, dass
- trotz höherer Anordnung der Plattform auf die vorab beschriebenen Stützen verzichtet werden kann;
- dass trotz des Verzichtes auf besagte Stützen eine ausreichende Spurstabilität der vorderen Rollen auch bei starker Stoßbelastung garantiert ist und
- dass das Schieben und Rangieren leichter als bisher durchführbar ist, wenn es gilt, den Transportwagen auf einem Untergrund oder Boden zu bewegen, der einen erhöhten Rollwiderstand aufweist.

Im Zuge einer Erweiterung der Erfindung soll sichergestellt sein, dass das Entnehmen des zu entwickelnden Transportwagens aus einem Stapelverbund gleicher Transportwagen ohne Schwierigkeiten möglich ist.

Die Lösung der primär gestellten Aufgabe ist gekennzeichnet durch folgende Merkmale:
a) jedes Rahmenteil ist im vorderen Bereich des Fahrgestelles nach unten abgewinkelt oder abgebogen, so dass an jedem Rahmenteil eine Abbiegung gebildet ist;
b) die Strebe, welche die beiden Rahmenteile im vorderen Bereich des Fahrgestelles verbindet, ist von der Seite betrachtet entweder zwischen den vorderen Fahrrollen und den beiden Abbiegungen angeordnet oder sie verbindet die beiden Abbiegungen;
c) der Raddurchmesser der vorderen Lenkrollen ist größer als der Raddurchmesser der hinteren Fahrrollen.

Die Lösung der erweitert gestellten Aufgabe ist dadurch erkennbar, dass sich bei einem Stapelverbund mehrerer gleicher Transportwagen bei einem sich zwangsläufig ergebenden Teil der Transportwagen in Nachlaufstellung der Lenk- und Fahrrollen, sowie in Seitenansicht betrachtet, die Radachsen der vorderen Lenkrollen näher an den Radachsen der hinteren Fahrrollen eines vorausbefindlichen Transportwagens befinden als an den Radachsen der hinteren Fahrrollen eines dem vorausbefindlichen Transportwagen von hinten nachfolgenden weiteren Transportwagens.

Aufgrund des vorgeschlagenen Merkmales a) sind in vorteilhafter Weise keine Stützelemente erforderlich. Dadurch reduziert sich der Teilaufwand zur Herstellung des Transportwagens. Die Herstellerkosten werden spürbar verringert und eine Verschmutzung erfolgt nicht, da keine Stützelemente mehr vorhanden sind.
Die Vorteile des Merkmales b) zeigen sich dadurch, dass der vordere Bereich des Fahrgestelles durch die Anordnung der Strebe zwischen den vorderen Lenkrollen und den Abbiegungen, oder zwischen den Abbiegungen selbst, sehr stabil gestaltet ist. Von den beiden Rahmenteilen verbleiben nur kurze Stummel, die an den vorderen Lenkrollen enden und diese tragen. Erfolgen starke Stöße auf die vorderen Lenkrollen, bilden diese Stummel nur ganz kurze Hebel, so dass in Verbindung mit der Strebe ein Verbiegen der vorderen Enden der beiden Rahmenteile ausgeschlossen ist. Dadurch ist eine ausreichenden Spurstabilität der vorderen Lenkrollen garantiert. Die Vorteile des Merkmales c) schließlich bestehen darin, dass sich der vorgeschlagene Transportwagen aufgrund des größer gewählten Raddurchmessers seiner vorderen Lenkrollen auf unebenem Boden wesentlich leichter schieben und rangieren lässt als bisher bekannte Transportwagen, bei denen ausnahmslos der Raddurchmesser der vorderen Lenkrollen und der hinteren Fahrrollen mit beispielsweise 125 mm immer gleich groß ist. Nicht zu unterschätzen ist dabei, dass zwei große Lenkrollen und zwei kleine Fahrrollen im Endeffekt billiger sind als vier große Lenk- und Fahrrollen. Die Herstellungskosten des vorgeschlagenen Transportwagens lassen sich dadurch ebenfalls reduzieren.

Insgesamt lässt die Erfindung primär einen Transportwagen entstehen, dessen Plattform sich höher anordnen lässt, so dass das Be- und Entladen des Wagens mit schwerer Ware erleichtert wird. Der Kassiervorgang an der Kasse lässt sich beschleunigen und durch die höhere Anordnung der Ware ist die abzurechnende Ware für eine Kassierperson mit einer Scannerpistole besser und dadurch schneller erreichbar. Ferner lässt sich der Transportwagen leichter bewegen, was den Kunden der Märkte zugute kommt.

Der Vorteil der erweitert gestellten Aufgabe besteht darin, dass durch die vorgeschlagene Anordnung der vorderen Lenkrollen und der hinteren Fahrrollen in einem Stapelverbund, bei dem die Transportwagen ja engstmöglich gestapelt sind, für die vorderen Lenkrollen ausreichend Raum verbleibt, damit sich die Räder der vorderen Lenkrollen beim Herausziehen eines Transportwagens aus dem Stapelverbund um 180° drehen können, ohne mit den Rädern oder den Radgehäusen der hinteren Fahrrollen benachbarter Transportwagen zu verhaken oder zu verklemmen. Letzteres ist ungemein wichtig, weil sich verhakte Transportwagen nur unter großen Mühen, und oft einhergehend mit Beschädigungen, aus einem Stapelverbund gleicher Transportwagen lösen lassen.

Vorteilhaft ist auch, wenn sich bei einem Transportwagen, bei dem sich die zum Anheben der Plattform erforderliche horizontale Achse im hinteren Bereich befindet, die Abstützstellen der Plattform entweder an jeder Abbiegung der längsseitigen Rahmenteile befinden oder näher an den Abbiegungen als an den Stützen für die Schiebeeinrichtung angeordnet sind. Dann nämlich kann das Fahrgestell dieses Transportwagens in ausgesprochener Leichtbauweise gestaltet werden, ohne eine Durchbiegung der beiden Rahmenteile bei hoher Beladung befürchten zu müssen.

Die Erfindung wird anhand von Ausführungsbeispielen näher erläutert. Es zeigt
- Fig. 1: einen von Hand bewegbaren Transportwagen, dessen Plattform um eine im hinteren Bereich gelegene horizontale Achse anhebbar gelagert ist;
- Fig. 2: bis Fig. 5 verschiedene Ausführungsbeispiele des in Fig. 1 beschriebenen Transportwagens;
- Fig. 6: einen von Hand bewegbaren Transportwagen, dessen Plattform um eine im vorderen Bereich befindliche horizontale Achse anhebbar gelagert ist;
- Fig. 7: den in Fig. 6 beschriebenen Transportwagen in Seitenansicht;
- Fig. 8: drei der in Fig. 6 und 7 vorgeschlagenen Transportwagen in ineinander geschobenem Zustand;
- Fig. 9: eine weitere Ausführungsform;
- Fig. 10: in Seitenansicht einen Stapelverbund bestehend aus fünf Transportwagen sowie
- Fig. 11: einen Stapelverbund in Draufsicht mit Blick auf die vorderen und hinteren Lenkrollen der gestapelten Transportwagen.

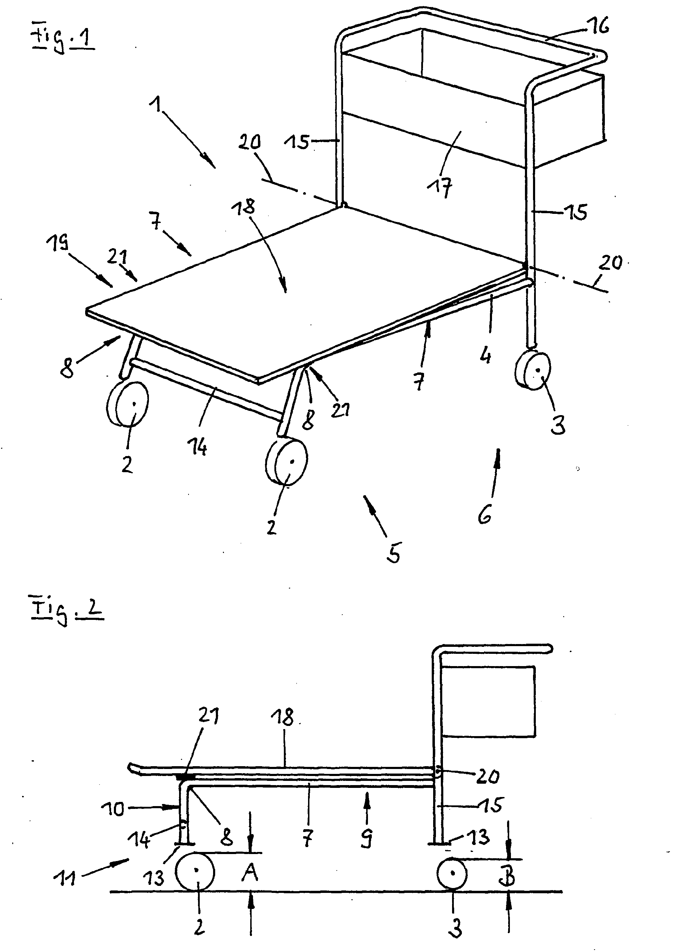

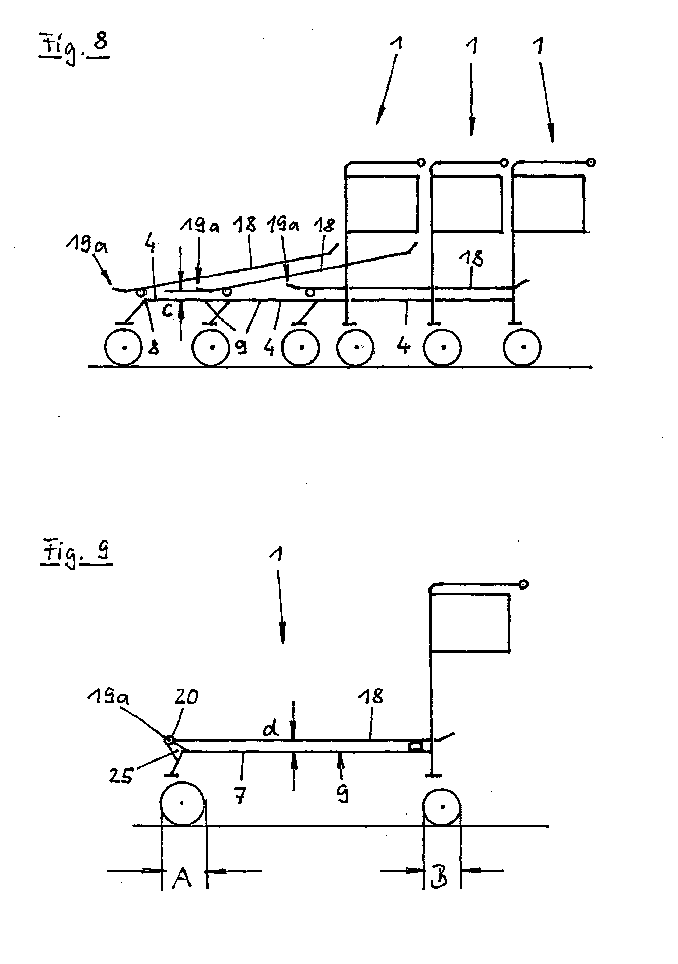

Fig. 1 zeigt einen von Hand bewegbaren Transportwagen 1, der in bekannter Weise so gestaltet ist, dass dieser sich in einen gleichen Transportwagen 1 Platz sparend einschieben, also stapeln lässt. Der Transportwagen 1 weist ein mit vorderen Lenkrollen 2 und mit hinteren Fahrrollen 3 ausgestattetes Fahrgestell 4 auf, das in bekannter Weise längsseitig zwei konvergierend angeordnete Rahmenteile 7 besitzt, die im vorderen Bereich 5 des Fahrgestelles 4 durch eine Strebe 14 verbunden sind. Am hinteren Bereich 6 des Fahrgestelles 4, und damit im hinteren Bereich des Transportwagens 1, ist eine Schiebeeinrichtung 16 vorgesehen, die von nach oben gerichteten Stützen getragen wird. Das Fahrgestell 4 trägt eine zum Abstellen von größeren Gegenständen bestimmte Plattform 18, die in ihrem vorderen Bereich 19 breiter ist als die zuvorderst gemessene Breite des Fahrgestelles 4. Die Plattform 18 ist um eine im hinteren Bereich 6 des Fahrgestelles 4 befindliche, quer zur Schieberichtung des Transportwagens 1 sich erstreckende horizontale Achse 20 anhebbar am Fahrgestell 4 gelagert, wobei die gewöhnlich einen rechteckigen oder annähernd rechteckigen Grundriss aufweisende Plattform 18 zwischen den Stützen 15 angeordnet ist. Diese Art der Lagerung ist in bekannter Weise deshalb notwendig, damit gleiche Transportwagen 1 Platz sparend ineinander geschoben werden können. In einem Abstand zur horizontalen Achse 20 stützt sich die Plattform 18 in ihrer Gebrauchslage mit Hilfe von Abstützstellen 21 auf dem Fahrgestell 4 ab. Es kann ein an oder nahe der Schiebeeinrichtung 16 angeordneter Korb 17 zur Aufnahme von kleineren Gegenständen vorgesehen sein. Anhand der Zeichnung erkennt man, dass jedes der beiden Rahmenteile 7 im vorderen Bereich 5 des Fahrgestelles 4 nach unten abgebogen oder abgewinkelt ist. Die Strebe 14 ist auf einer Höhe angeordnet, die sich zwischen den vorderen Fahrrollen 2 und den beiden Abbiegungen 8 befindet. Die Abstützstellen 21 sind im Beispiel näher an den Abbiegungen 8 als an den Stützen 15 angeordnet. Der Raddurchmesser A der vorderen Lenkrollen 2 ist größer als der Raddurchmesser B der hinteren Fahrrollen 3, siehe insbesondere Fig. 2 und Fig. 9. Dies trifft auf alle hier beschriebenen Ausführungsbeispiele zu. Die hinteren Fahrrollen 3 können ebenfalls als Lenkrollen oder aber auch als bekannte Bockrollen ausgebildet sein, bei denen bekanntlich die Radgabel starr angeordnet ist.

Alle nachfolgenden Ausführungsbeispiele gemäß Fig. 2 bis Fig. 5 orientieren sich an dem in Fig. 1 beschriebenen Transportwagen 1. Die Zeichnungen zeigen die unterschiedlich gestalteten Transportwagen 1 in Seitenansicht.

Bei dem in Fig. 2 dargestellten Transportwagen 1 weisen die konvergierend angeordneten Rahmenteile 7 einen horizontalen und einen vertikalen Abschnitt 9, 10, auf, wobei jeweils die beiden Abschnitte 9, 10 durch eine Abbiegung 8 verbunden sind. Beide Rahmenteile 7 sind somit nach unten abgebogen. An den freien Enden 11 der beiden vertikalen Abschnitte 10 ist jeweils eine vordere Lenkrolle 2 angeordnet. Die beiden Stützen 15 tragen die hinteren Fahrrollen 3. Der oberhalb der Plattform 18 befindliche Raum ist frei zugänglich. Die Plattform 18 kann somit nach oben hin, ja sogar über die Höhe der Schieberichtung 16 hinaus, mit größeren Gegenständen beladen werden. Im Beispiel befinden sich die beiden Abstützstellen 21 für die Plattform 18 an je einer Abbiegung 8 der beiden Rahmenteile 7. Die Strebe 14 ist von der Seite betrachtet zwischen den vorderen Fahrrollen 2 und den beiden Abbiegungen 8 angeordnet und verbindet die beiden Rahmenteile 7.

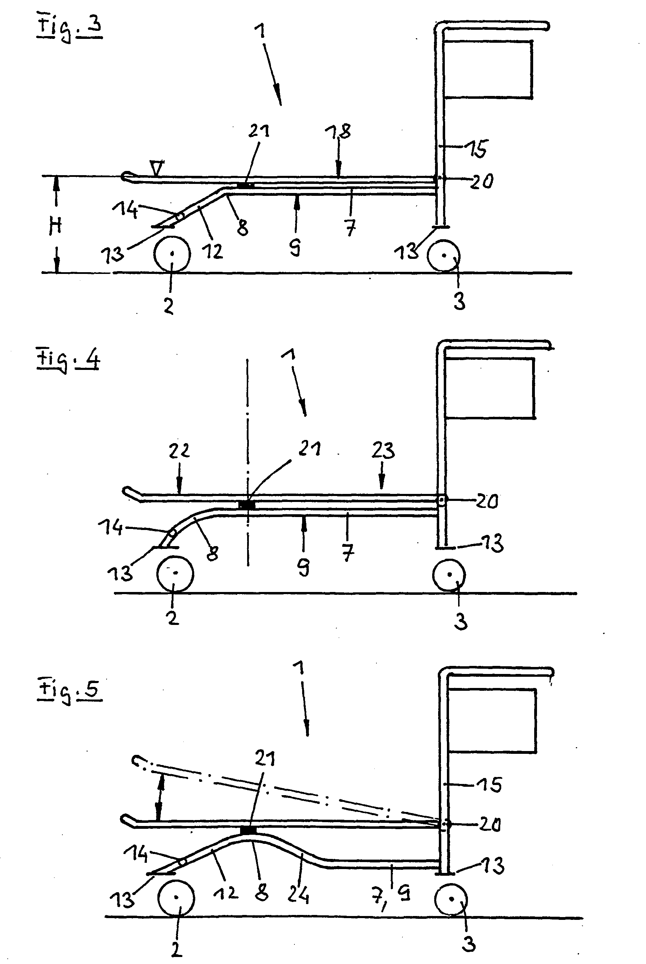

Bei dem in Fig. 3 gezeigten Ausführungsbeispiel weisen die beiden konvergierend angeordneten Rahmenteile 7 einen horizontalen Abschnitt 9 und einen nach unten führenden schrägen Abschnitt 12 auf, wobei jeder Abschnitt 9, 12 durch eine Abbiegung 8 verbunden ist. Die Abstützstellen 21 für die Plattform 18 befinden sich auf je einem horizontalen Abschnitt 9 der Rahmenteile 7. Alle weiteren Details entsprechen jenen Details, wie in Fig. 1 und 2 beschrieben. Die Strebe 14 verbindet die beiden Rahmenteile 7 auf einer Höhe, die sich zwischen den vorderen Fahrrollen 2 und den Abbiegungen 8 befindet.

Der in Fig. 4 dargestellte Transportwagen 1 unterscheidet sich von den bisher beschriebenen Transportwagen 1 dadurch, dass die beiden Rahmenteile 7 einen horizontalen Abschnitt 9 aufweisen und jedem horizontalen Abschnitt 9 eine nach unten führende Abbiegung 8 folgt. Hier fehlt also der vertikale Abschnitt 10 oder der schräge Abschnitt 12. Die beiden Anstützstellen 21 für die Plattform 18 befinden sich an den Abbiegungen 8, bevorzugt an deren oberem Ende. Die Strebe 14 wiederum verbindet die beiden Abbiegungen 8 der beiden Rahmenteile 7.

Bei dem in Fig. 5 dargestellten Transportwagen 1 weisen die beiden Rahmenteile 7 einen von den Stützen 15 wegführenden horizontalen Abschnitt 9 auf, dem ein ansteigender Abschnitt 24 folgt. Jeder Abschnitt 24 mündet in eine Abbiegung 8, an die sich ein schräger Abschnitt 12 anschließt, wobei jeder Abschnitt 12 an seinem Ende eine Platte 13 zum Befestigen der vorderen Lenkrollen 2 trägt. Diese Ausführung ist aus Stabilitätsgründen dann von Nutzen, wenn die Plattform 18, gemessen vom Fußboden, sehr hoch angeordnet ist. Man vermeidet damit bei den beiden Stützen 15 unnötig lange, nach unten führende Stummel, an welchen die hinteren Fahrrollen 3 befestigt sind. Beim vorgeschlagenen Beispiel sind die beiden horizontalen Abschnitte 9 der beiden Rahmenteile unmittelbar über den Platten 13 mit den Stützen 15 verbunden. Die verbliebenen kurzen Stummel bilden ganz kurze Hebelarme, die imstande sind, große, beim Fahren auftretende Stoßkräfte schadlos aufzunehmen. Alle weiteren Details des so gestalteten Transportwagens 1 lassen sich der vorausgegangenen Beschreibung entnehmen.

Es ist von Vorteil, die Strebe 14 bei allen Ausführungsbeispielen nahe an den vorderen Fahrrollen anzuordnen. Diese Anordnung verleiht dem Fahrgestell 4 ein hohes Maß an Stabilität.
Auch ist es zweckmäßig, bei allen Ausführungsbeispielen an den nach unten gerichteten freien Enden 11 der Rahmenteile 7 jeweils eine Platte 13 anzuschweißen, so dass an jeder Platte 13 eine vordere Lenkrolle 2 angeschraubt werden kann. Ebenso ist es sinnvoll, an den unteren Enden der Stützen 15 ebenfalls je eine derartige Platte 13 zum Befestigen der hinteren Fahrrollen 3 anzuschweißen.
Vorteilhaft ist auch, die Abstützstellen 21 an den beiden Rahmenteilen 7 oder an der Plattform 18 so vorzusehen, dass die Länge der Plattform 18, wie aus den Zeichnungen ersichtlich, durch einen vorderen kürzeren Abschnitt 22 und einen hinteren längeren Abschnitt 23 aufgeteilt wird, siehe Fig. 4. In beladenem Zustand der Plattform 18 wirken die durch eine Beladung entstehenden Kräfte auf die Plattform 18 und auf die beiden Abschnitte 9, 10, 12 der Rahmenteile 7 so ein, dass sich trotz Leichtbauweise ein unzulässiges Durchbiegen von Plattform 18 und den eben genannten Abschnitten nicht einstellt. Die wenigstens zwei Abstützstellen 21 können durch aus Kunststoff bestehende Auflager gebildet sein, die elastische Eigenschaften aufweisen und somit dämpfend wirken. Es stellen sich somit beim Fahren mit einem leeren Transportwagen 1 keine lästigen, durch die Plattform 18 in Zusammenwirken mit den Rahmenteilen 7 auftretenden Klappergeräusche ein.
Die beiden Rahmenteile 7 können durch ein einziges Bauteil gebildet sein und zwar so, dass die beiden ursprünglichen Rahmenteile 7 vorderendig in eine quer verlaufende Strebe 14 münden, wobei dann die vorderen Fahrrollen 2 in geeigneter Weise an der Unterseite der Strebe 14 befestigt sind.
Beim Platz sparenden Ineinanderschieben zweier gleicher Transportwagen 1 wird das Fahrgestell 4 eines rückwärtig eingeschobenen Transportwagens 1 im Bereich der Rahmenteile 7 vom Fahrgestell 4 des vorausbefindlichen Transportwagens 1 teilweise aufgenommen. Die Plattform 18 des rückwärtigen Transportwagens 1 wiederum gleitet beim Ineinanderschiebevorgang am hinteren Ende des vorausbefindlichen Transportwagens 1 auf und wird, je weiter man das Ineinanderschieben vornimmt, mehr und mehr angehoben, siehe Fig. 5. Die Plattform 18 des eingeschobenen Transportwagens1 nimmt dann eine schräg ansteigende Lage ein.

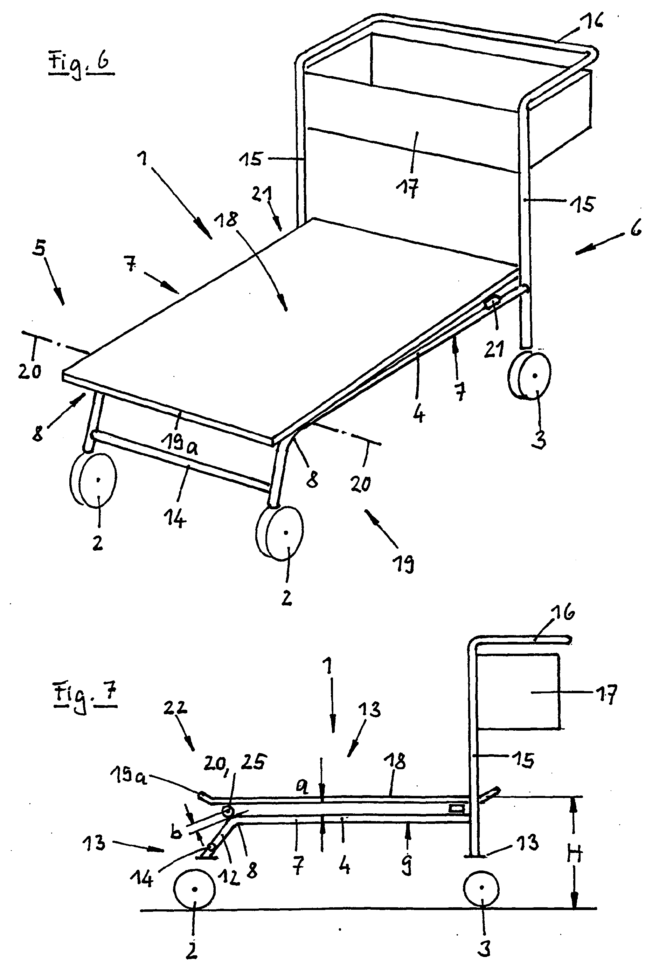

Fig. 6 zeigt einen von Hand bewegbaren Transportwagen 1, der in bekannter Weise so gestaltet ist, dass sich dieser ebenfalls in einen gleichen Transportwagen 1 Platz sparend einschieben, also stapeln lässt. Der Transportwagen 1 weist ein mit vorderen Lenkrollen 2 und mit hinteren Fahrrollen 3 ausgestattetes Fahrgestell 4 auf, das in bekannter Weise längsseitig zwei konvergierend angeordnete Rahmenteile 7 besitzt, die im vorderen Bereich 5 des Fahrgestelles 4 durch eine Strebe 14 verbunden sind. Am hinteren Bereich 6 des Fahrgestelles 4, und damit im hinteren Bereich des Transportwagens 1, ist eine Schiebeeinrichtung 16 vorgesehen, die von nach oben gerichteten Stützen 15 getragen wird. Das Fahrgestell 4 trägt eine zum Abstellen von größeren Gegenständen bestimmte Plattform 18, die in ihrem vorderen Bereich 19, also mit ihrer vorderen Querverbindung 19a, breiter ist als die zuvorderst gemessene Breite des Fahrgestelles 4. Die Plattform18 ist jedoch im Gegensatz zu den in den Figuren 1 bis 5 beschriebenen Transportwagen 1, um eine im vorderen Bereich 5 des Fahrgestelles 4 befindliche, quer zur Schieberichtung des Transportwagens 1 sich erstreckende horizontale Achse 20 anhebbar am Fahrgestell 4 gelagert, wobei die gewöhnlich einen rechteckigen Grundriss aufweisende Plattform 18 zwischen den Stützen 15 angeordnet ist. Diese Art der Lagerung ist in bekannter Weise deshalb notwendig, damit gleiche Transportwagen 1 Platz sparend ineinander geschoben werden können. In einem Abstand zur horizontalen Achse 20 stützt sich die Plattform 18 in ihrer Gebrauchslage mit Hilfe von Abstützstellen 21, bevorzugt nahe der Stützen 15, auf dem Fahrgestell 4 ab. Es kann ein an oder nahe der Schiebeeinrichtung 16 angeordneter Korb 17 zur Aufnahme von kleineren Gegenständen vorgesehen sein. Anhand der Zeichnung erkennt man, dass jedes der beiden Rahmenteile 7 im vorderen Bereich 5 des Fahrgestelles 4 nach unten abgebogen oder abgewinkelt ist. Die Strebe 14 ist auf einer Höhe angeordnet, die sich zwischen den vorderen Fahrrollen 2 und den beiden Abbiegungen 8 befindet.

Fig. 7 zeigt den in Fig. 6 beschriebenen Transportwagen 1 von der Seite betrachtet. Von den Stützen 15 ausgehend erstrecken sich die konvergierend angeordneten Rahmenteile 7 nach vorne. Jedes Rahmenteil 7 weist einen horizontalen Abschnitt 9 und einen im Beispiel schräg nach unten gerichteten Abschnitt 12 auf. Man erkennt die zwischen den Abbiegungen 8 und den vorderen Lenkrollen 2 angeordnete Strebe 14, welche die schrägen Abschnitte 12 der Rahmenteile 7 verbindet. Man erkennt ferner die Stützen 15, die Schiebeeinrichtung 16 sowie den Korb 17. Im Beispiel ist an jeder Abbiegung 8 ein Lager 25 zum Tragen der Plattform 18 angeordnet, wobei jedes Lager 25 so gestaltet und angeordnet ist, dass die horizontale Achse 20, um welche sich die Plattform 18 anheben lässt, in einem Abstand zum Fahrgestell 4 verläuft. Man erkennt dies durch den zu jedem horizontalen Abschnitt 9 gebildeten Abstand a und durch den zu jeder Abbiegung 8 gebildeten Abstand b. Die besondere Bedeutung dieser Anordnung ist im nachfolgenden Ausführungsbeispiel näher beschrieben. Die Lage der auf der horizontalen Achse 20 gelegenen Lager 25 ist im Beispiel so gewählt, dass die Plattform 18 in einen vorderen kürzeren Abschnitt 22 und in einen hinteren längeren Abschnitt 23 aufgeteilt ist. Aus der Zeichnung ist die vordere Querverbindung 19a erkennbar, die im Beispiel in Schieberichtung des Transportwagens 1 leicht ansteigend gestaltet ist.

Fig. 8 zeigt drei Platz sparend ineinander geschobene Transportwagen 1, wie diese in den Figuren 6 und 7 beschrieben worden sind. Beim Vorgang des Ineinanderschiebens werden in bekannter Weise die Plattformen 18 der vorausbefindlichen Transportwagen 1 angehoben, während die Plattform 18 des zuletzt eingeschobenen Transportwagens 1, in der Zeichnung ganz rechts, in ihrer horizontalen Gebrauchslage verbleibt. Die vordere Querverbindung 19a der angehobenen Plattform 18 des vorderen Transportwagens 1 ragt nach vorne und stößt nicht an das Fahrgestell oder an die Abbiegungen 8 des eigenen Transportwagens 1 an. Die vordere Querverbindung 19a der ebenfalls angehobenen Plattform 18 des mittleren Transportwagens 1 verläuft in einem Abstand c zum horizontalen Abschnitt 9 der Rahmenteile 7 des vordersten Transportwagens 1. Die Querverbindung 19a stößt also in angehobenem Zustand der Plattform 18 nicht an das Fahrgestell 4 des vorderen Transportwagens 1 an. Die Plattform 18 des hinteren Transportwagens 1 schließlich verbleibt in der Gebrauchslage. Auch hier ist die vordere Querverbindung 19a der Plattform 18 dieses Transportwagens 1 in einem Abstand zum Fahrgestell 4 der vorausbefindlichen Transportwagen angeordnet und stößt an deren Fahrgestelle 4 nicht an.

Beim Transportwagen 1 gemäß Fig. 9 verläuft die vordere Querverbindung 19a der Plattform 18 exakt auf der horizontalen Achse 20. Auch hier erkennt man die zweckmäßige Anordnung der auf der horizontalen Achse 20 gelegenen Lager 25, die einen Abstand d der Plattform 18 zu den horizontalen Abschnitten 9 der Rahmenteile 7 entstehen lassen. Auch hier stößt, bezogen auf die Ausführungen in Fig. 8, die vordere Querverbindung 19a der Plattform 18 mehrerer Transportwagen 1 in ineinander geschobenem Zustand nicht an die jeweiligen Fahrgestelle 4 an. Im Beispiel sind die Lager 25 an je einem schrägen Abschnitt 12 der Rahmenteile 7 befestigt.

Es ist von Vorteil, die Strebe 14 bei allen Ausführungsbeispielen gemäß Fig. 6 bis 9 nahe an den vorderen Fahrrollen 2 anzuordnen. Diese Anordnung verleiht dem Fahrgestell 4 ein hohes Maß an Stabilität.
Auch ist es zweckmäßig, bei allen diesen Ausführungsbeispielen an den nach unten gerichteten freien Enden 11 der Rahmenteile 7 jeweils eine Platte 13 anzuschweißen, so dass an jeder Platte 13 eine vordere Lenkrolle 2 angeschraubt werden kann. Ebenso ist es sinnvoll, an den unteren Enden der Stützen 15 ebenfalls eine derartige Platte 13 zum Befestigen der hinteren Fahrrollen 3 anzuschweißen, vgl. Fig. 7.
Die Rahmenteile 7 können durch ein einziges Bauteil gebildet sein und zwar so, dass die beiden ursprünglichen Rahmenteile 7 vorderendig in eine quer verlaufende Strebe 14 münden, wobei dann die vorderen Fahrrollen 2 in geeigneter Weise an der Unterseite der Strebe 14 befestigt sind.
Anhand sämtlicher Ausführungsbeispiele lässt die Erfindung unterschiedliche Transportwagen 1 entstehen. So ist es durchaus möglich, bei einem Raddurchmesser der vorderen Lenkrollen 2 von 160 mm und der hinteren Fahrrollen 3 von 125 mm die Rahmenteile 7 so zu gestalten, dass die Oberseite der Plattform 18 eine Höhe H, gemessen vom Fußboden, von mindestens 250 mm einnimmt, siehe Figuren 3 und 7. In allen Fällen sind, im Gegensatz zum Stand der Technik, keine V- oder U-förmig gestalteten Stützelemente mehr erforderlich.

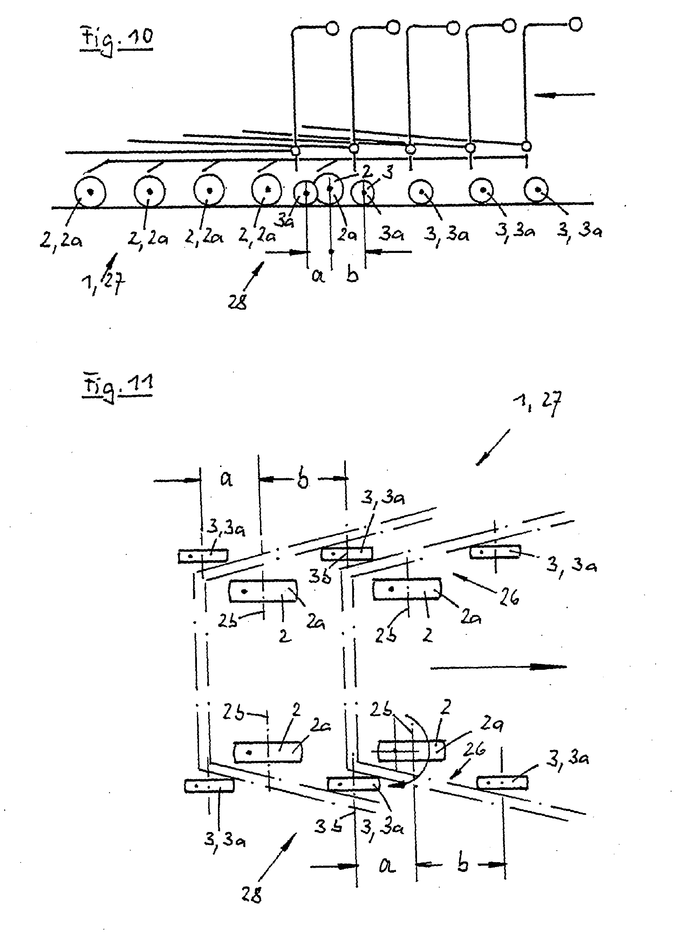

Fig. 10 zeigt in Seitenansicht einen aus fünf ineinander geschobenen Transportwagen 1 gebildeten Stapelverbund 27. Man erkennt die vorderen Lenkrollen 2 und die hinteren, ebenfalls als Lenkrollen ausgebildeten Fahrrollen 3 der einzelnen Transportwagen 1. Die Räder 2a der vorderen Lenkrollen 2 und die Räder 3a der hinteren Fahrrollen 3 befinden sich in der sogenannten "Nachlaufstellung", die sich in bekannter Weise dann ergibt, wenn die Transportwagen 1 geschoben werden, wie dies beim Einschieben eines Transportwagens 1 in das rückwärtige Ende des Stapelverbundes 27 der Fall ist, siehe auch Pfeil. Die Nachlaufstellung bei Lenkrollen ergibt sich in bekannter Weise deshalb, weil die senkrechte Schwenkachse der Radgabeln, in Seitenansicht betrachtet, in einem Abstand zu den horizontalen Radachsen 2b, 3b angeordnet sind. Eingezeichnet sind Maße a und b, deren Bedeutung nachfolgend näher erläutert wird. Man erkennt, dass sich die Räder 2a der vorderen Lenkrollen 2 des zuletzt in den Stapelverbund 27 eingeschobenen Transportwagens 1 zwischen den hinteren Fahrrollen 3 zweier benachbarter Transportwagen 1 befinden. Dieser Zustand stellt sich also bei einem Teil 28 der Transportwagen 1 ein, wobei dieser Teil 28 immer größer wird, je mehr Transportwagen 1 sich in einem Stapelverbund 27 befinden. Anhand der Zeichnung ist dies leicht vorstellbar.

Ausschnittsweise und in einer Draufsicht zeigt Fig. 11 die vorderen Lenkrollen 2 zweier Transportwagen 1 und die hinteren Fahrrollen 3 dreier Transportwagen 1, die sich in einem Stapelverbund 27 befinden. Die Räder 2a der vorderen Lenkrollen 2 gehören einem Transportwagen 1 an, der das hintere Ende des Stapelverbundes 27 bildet und der dem Stapelverbund 27 entnommen werden soll. Das Maß a ist kleiner als das Maß b. Dies bedeutet, dass sich bei besagtem Teil 28 der Transportwagen 1 im Stapelverbund 27 die Radachsen 25 der vorderen Lenkrollen 2 näher an den Radachsen 3b der hinteren Fahrrollen 3 eines vorausbefindlichen Transportwagens 1 befmden als an den Radachsen 3b der hinteren Fahrrollen 3 eines dem vorausbefindlichen Transportwagen 1 von hinten nachfolgenden weiteren Transportwagens 1. Beim Entnehmen des letzten Transportwagens 1 aus dem Stapelverbund 27, siehe Pfeil, schwenken die Räder 2a der vorderen Lenkrollen 2 und der hinteren Fahrrollen 3 dieses Transportwagens 1 bekanntlich um 180°, um die beim Ziehen des Transportwagens 1 sich einstellende neue Nachlaufstellung einzunehmen. Bei einem Rad 2a der beiden vorderen Lenkrollen 2 des zu entnehmenden Transportwagens 1 ist ein bogenförmiger Pfeil eingezeichnet, der den Schwenkvorgang des Rades 2a beim Herausziehen des Transportwagens 1 darstellen soll. Man erkennt, dass sich das größere Rad 2a dem kleineren Rad 3a einer vorausbefindlichen hinteren Fahrrolle 3 eines anderen Transportwagens 1 nähert. Gleichzeitig wandert das Rad 2a dieser vorderen Lenkrolle 2 jedoch in der Zeichnung nach rechts, so dass beim Schwenkvorgang des Rades 2a der vorderen Lenkrolle 2 der Schwenkvorgang in etwa innerhalb des Zwischenraums 26 stattfindet, der durch die unmittelbar benachbarten kleineren Räder 3a zweier hinterer Fahrrollen 3 gebildet ist. Das eben beschriebene Rad 2a schlägt somit nicht an die beiden unmittelbar benachbarten Räder 3a der hinteren Fahrrollen 3 an. Es schlägt auch nicht an die Radgabeln dieser hinteren Fahrrollen 3 an. Sollte das Rad 2a der vorderen Lenkrolle 2 trotzdem an ein Rad 3a von einer der beiden hinteren Fahrrollen 3 anstoßen, weicht das Rad 3a dieser hinteren Fahrrolle 3 aus, so dass es ebenfalls nicht zu einer Verklemmung dieser Räder 2a und 3a kommt. Dadurch dass das Maß a kleiner ist als das Maß b wird einer Verklemmung der Räder 2a von vorderen Lenkrollen 2 mit den Rädern 3a von hinteren Fahrrollen 3 entgegengewirkt.

## Patentansprüche

1. Von Hand bewegbarer Transportwagen (1), der in einen gleichen Transportwagen (1) platzsparend einschiebbar ist, mit einem mit vorderen Lenkrollen (2) und mit hinteren Fahrrollen (3) ausgestatteten Fahrgestell (4), das längsseitig zwei konvergierend angeordnete Rahmenteile (7) sowie im vorderen Bereich (5) des Fahrgestelles (4) eine die Rahmenteile (7) verbindende Strebe (14) aufweist, mit einer im hinteren Bereich (6) des Fahrgestelles (4) vorgesehenen, an Stützen (15) angeordneten Schiebeeinrichtung (16) sowie mit einer vom Fahrgestell (4) getragenen, zum Abstellen größerer Gegenstände bestimmten Plattform (18), die im vorderen Bereich (5) breiter ist als die zuvorderst gemessene Breite des Fahrgestelles (4), wobei die Plattform (18) entweder um eine im hinteren Bereich (6) oder um eine im vorderen Bereich (5) des Fahrgestelles (4) befindliche, quer zur Schieberichtung des Transportwagens (1) sich erstreckende horizontale Achse (20) anhebbar am Fahrgestell (4) gelagert ist und sich in einem Abstand zur horizontalen Achse (20) mit Hilfe von Abstützstellen (21) auf dem Fahrgestell (4) abstützt und wobei ein nahe der Schiebeeinrichtung (16) angeordneter, zur Aufnahme von kleineren Gegenständen bestimmter Korb (17) vorgesehen sein kann, **gekennzeichnet durch** folgende Merkmale:
**a)** jedes Rahmenteil (7) ist im vorderen Bereich (5) des Fahrgestelles (4) nach unten abgewinkelt oder abgebogen, so dass an jedem Rahmenteil (7) eine Abbiegung (8) gebildet ist;
**b)** die Strebe (14), welche die beiden Rahmenteile (7) im vorderen Bereich (5) des Fahrgestelles (4) verbindet, ist von der Seite betrachtet entweder zwischen den beiden vorderen Lenkrollen (2) und den beiden Abbiegungen (8) angeordnet oder sie verbindet die beiden Abbiegungen (8);
**c)** der Raddurchmesser der vorderen Lenkrollen (2) ist größer als der Raddurchmesser der hinteren Fahrrollen (3).

2. Transportwagen nach Anspruch 1, **dadurch gekennzeichnet, dass** sich bei einem Stapelverbund (27) mehrerer gleicher Transportwagen (1) bei einem zwangsläufig sich ergebenden Teil (28) der Transportwagen (1) und in Nachlaufstellung der Räder (2a) und (3a) der vorderen Lenkrollen (2) und der hinteren Fahrrollen (3) sowie in Seitenansicht betrachtet die Radachsen (2b) der vorderen Lenkrollen (2) näher an den Radachsen (3b) der hinteren Fahrrollen (3) eines vorausbefindlichen Transportwagens (1) befinden als an den Radachsen (3b) der hinteren Fahrrollen (3) eines dem vorausbefindlichen Transportwagen (1) von hinten nachfolgenden weiteren Transportwagens (1).

3. Transportwagen nach Anspruch 1, **dadurch gekennzeichnet, dass** die Rahmenteile (7) entweder einen horizontalen Abschnitt (9) und einen vertikalen Abschnitt (10) oder einen horizontalen Abschnitt (9) und einen schräg nach unten gerichteten Abschnitt (12) aufweisen.

4. Transportwagen nach Anspruch 1, **dadurch gekennzeichnet, dass** die Rahmenteile (7) einen horizontalen Abschnitt (9) aufweisen, an den sich eine Abbiegung (8) anschließt.

5. Transportwagen nach Anspruch 1, **dadurch gekennzeichnet, dass** die Rahmenteile (7) einen horizontalen Abschnitt (9) aufweisen, dem ein ansteigender Abschnitt (24), anschließend eine Abbiegung (8) und dann ein schräg nach unten führender Abschnitt (12) folgt.

6. Transportwagen nach Anspruch 1, **dadurch gekennzeichnet, dass** die Lage der Abstützstellen (21) so gewählt ist, dass die Plattform (18) in einen vorderen kürzeren Abschnitt (22) und in einen hinteren längeren Abschnitt (23) aufgeteilt ist.

7. Transportwagen nach Anspruch 1, **dadurch gekennzeichnet, dass** sich bei im hinteren Bereich (6) des Transportwagens (1) angeordneter horizontaler Achse (20) die Abstützstellen (21) der Plattform (18) entweder an jeder Abbiegung (8) befinden oder dass die Abstützstellen (21) der Plattform (18) näher an den Abbiegungen (8) als an den Stützen (15) für die Schiebeeinrichtung (16) angeordnet sind.

8. Transportwagen nach Anspruch 1, **dadurch gekennzeichnet, dass** bei im vorderen Bereich (5) des Transportwagens (1) angeordneter horizontaler Achse (20) die Lage der horizontalen Achse (20) so gewählt ist, dass in zusammengeschobenem Zustand mehrerer Transportwagen (1) die vordere Querverbindung (19a) der Plattform (18) in einem Abstand zum Fahrgestell (4) des eigenen und der anderen Transportwagen (1) angeordnet ist.

9. Transportwagen nach Anspruch 1, **dadurch gekennzeichnet, dass** die Plattform (18) an zwei Lagern (25) bewegbar gelagert ist, die entweder an den Abbiegungen (8) oder an den schräg nach unten gerichteten Abschnitten (12) angeordnet sind.

10. Transportwagen nach Anspruch 1, **dadurch gekennzeichnet, dass** die Abstützstellen (21) durch Auflager gebildet sind, die aus elastischem Kunststoff bestehen.

11. Transportwagen nach Anspruch 1, **dadurch gekennzeichnet, dass** die Oberseite der Plattform (18) mindestens 250 mm über dem Fußboden angeordnet ist.

## Claims

1. A manually movable trolley (1) which can be pushed into an identical trolley (1) in a space-saving manner, having a wheel frame (4), provided with front swivel casters (2) and with rear travelling casters (3), which at the long side has two convergently arranged frame parts (7) and in the front region (5) of the wheel frame (4) has a strut (14) which connects the frame parts (7), having a pushing arrangement (16), provided in the rear region (6) of the wheel frame (4) and arranged on supports (15), as well as having a platform (18), borne by the wheel frame (4) and for the depositing of relatively large objects, which is wider in the front region (5) than the width of the wheel frame (4) measured right at the front, wherein the platform (18) is mounted on the wheel frame (4) so as to be able to be raised about a horizontal axis (20), extending transversely to the pushing direction of the trolley (1) and being located either in the rear region (6) or in the front region (5) of the wheel frame (4), and at a distance from the horizontal axis (20) is supported on the wheel frame (4) with the aid of supporting sites (21) and wherein a basket (17), arranged close to the pushing arrangement (16) and intended to receive relatively small objects, can be provided, **characterised by** the following features:
a. in the front region (5) of the wheel frame (4), each frame part (7) is downwardly bent at an angle or downwardly curved, so that a bend (8) is formed at each frame part (7);
b. in a lateral view, the strut (14), connecting the two frame parts (7) in the front region (5) of the wheel frame (4), is either arranged between the two front swivel casters (2) and the two bends (8) or connects the two bends (8);
c. the wheel diameter of the front swivel casters (2) is greater than the wheel diameter of the rear travelling casters (3).

2. A trolley according to claim 1, **characterised in that** when a plurality of identical trolleys (1) are combined in a stack (27) and the wheels (2a) and (3a) of the front swivel casters (2) and the rear travelling casters (3) are in the tracking position, viewed laterally the wheel axes (2b) of the front swivel casters (2) are, at an unavoidably resulting part (28) of the trolley (1), located closer to the wheel axes (3b) of the rear travelling casters (3) of a trolley (1) located in front than to the wheel axes (3b) of the rear travelling casters (3) of another trolley (1) following from behind the trolley (1) located in front.

3. A trolley according to claim 1, **characterised in that** the frame parts (7) have either a horizontal portion (9) and a vertical portion (10) or a horizontal portion (9) and a portion (12) directed obliquely downwards.

4. A trolley according to claim 1, **characterised in that** the frame parts (7) have a horizontal portion (9) which is adjoined by a bend (8).

5. A trolley according to claim 1, **characterised in that** the frame parts (7) have a horizontal portion (9) followed by an ascending portion (24), then a bend (8) and then a portion (12) running obliquely downwards.

6. A trolley according to claim 1, **characterised in that** the position of the supporting sites (21) is selected in such a manner that the platform (18) is divided into a front, shorter portion (22) and a rear, longer portion (23).

7. A trolley according to claim 1, **characterised in that** when the horizontal axis (20) is arranged in the rear region (6) of the trolley (1), the supporting sites (21) of the platform (18) either are located on each bend (8) or are arranged closer to the bends (8) than to the supports (15) for the pushing arrangement (16).

8. A trolley according to claim 1, **characterised in that** when the horizontal axis (20) is arranged in the front region (5) of the trolley (1), the position of the horizontal axis (20) is selected in such a manner that the front transverse connection (19a) of the platform (18) is arranged at a distance from the wheel frame (4) of its own trolley and the other trolley (1) in the pushed-together state of a plurality of trolleys (1).

9. A trolley according to claim 1, **characterised in that** the platform (18) is movably mounted on two bearings (25) arranged either on the bends (8) or on the portions (12) directed obliquely downwards.

10. A trolley according to claim 1, **characterised in that** the supporting sites (21) are formed by pads of a resilient plastics material.

11. A trolley according to claim 1, **characterised in that** the upper side of the platform (18) is arranged at least 250 mm above the floor.

## Revendications

1. Chariot de transport (1) pouvant être déplacé manuellement, que l'on peut coulisser dans un chariot de transport (1) identique de manière à gagner de la place, comportant un châssis de roulement (4), qui est équipé de roues directrices avant (2) et de roues guidées arrière (3) et qui comporte du côté longitudinal deux parties de châssis (7) disposées de manière convergente, ainsi que, dans la zone avant (5) du châssis de roulement (4), une entretoise (14) reliant les parties de châssis (7), comportant un système de poignée (16), agencé sur des montants (15) et prévu dans la zone arrière (6) du châssis de roulement (4), et comportant une plate-forme (18) destinée à recevoir des objets relativement grands, qui est supportée par le châssis de roulement (4) et qui, dans la zone avant (5), est plus large que la largeur mesurée à l'avant du châssis de roulement (4), la plate-forme (18) étant montée sur le châssis de roulement (4) de manière à pouvoir être relevéé autour d'un axe horizontal (20), situé soit dans la zone arrière (6), soit dans la zone avant (5) du châssis de roulement (4) et orienté transversalement à la direction de déplacement du chariot de transport (1), et prenant appui sur le châssis de roulement (4) à distance de l'axe horizontal (20) au moyen de points d'appui (21), et un panier (17), destiné à recevoir des objets relativement petits, étant prévu à proximité du système de poignée (16), **caractérisé par** les caractéristiques suivantes :
a) chaque partie de châssis (7) est pliée ou coudée vers le bas dans la zone avant (5) du châssis de roulement (4), de telle sorte qu'un coude (8) est formé sur chaque partie de châssis (7) ;
b) l'entretoise (14), qui relie les deux parties de châssis (7) dans la zone avant (5) du châssis de roulement (4), est disposée, par référence à une vue de profil, entre les deux roues directrices avant (2) et les deux coudes (8) ou elle relie les deux coudes (8) ;
c) le diamètre des roues directrices avant (2) est plus grand que le diamètre des roues guidées arrière (3).

2. Chariot de transport selon la revendication 1, **caractérisé en ce que**, dans le cas d'un ensemble emboîté (27) de plusieurs chariots de transport (1) identiques dans une partie (28), obtenue nécessairement, des chariots de transport (1) et dans une position successive des roues (2a) et (3a) des roues directrices avant (2) et des roues guidées arrière (3), ainsi que sur une vue de profil, les essieux (2b) des roues directrices avant (2) sont situés plus près des essieux (3b) des roues guidées arrière (3) d'un chariot de transport (1) situé devant que des essieux (3b) des roues guidées arrière (3) d'un autre chariot de transport (1) suivant de l'arrière le chariot de transport (1) situé devant.

3. Chariot de transport selon la revendication 1, **caractérisé en ce que** les parties de châssis (7) comportent soit une partie horizontale (9) et une partie verticale (10), soit une partie horizontale (9) et une partie (12) inclinée vers le bas.

4. Chariot de transport selon la revendication 1, **caractérisé en ce que** les parties de châssis (7) comportent une partie horizontale (9), qui se prolonge par un coude (8).

5. Chariot de transport selon la revendication 1, **caractérisé en ce que** les parties de châssis (7) comportent une partie horizontale (9) qui se prolonge par une partie ascendante (24), puis un coude (8) et ensuite une partie (12) guidée en inclinaison vers le bas.

6. Chariot de transport selon la revendication 1, **caractérisé en ce que** la position des points d'appui (21) est choisie de telle sorte que la plate-forme (18) est divisée en une partie avant (22) plus courte et une partie arrière (23) plus longue.

7. Chariot de transport selon la revendication 1, **caractérisé en ce que**, lorsque l'axe horizontal (20) est disposé dans la zone arrière (6) du chariot de transport (1), les points d'appui (21) de la plate-forme (18) se situent au niveau de chaque coude (8), ou **en ce que** les points d'appui (21) de la plate-forme (18) sont disposés plus près des coudes (8) que des montants (15) pour le système de poignée (16).

8. Chariot de transport selon la revendication 1, **caractérisé en ce que**, lorsque l'axe horizontal (20) est disposé dans la zone avant (5) du chariot de transport (1), la position de l'axe horizontal (20) est choisie de telle sorte que dans la position emboîtée de plusieurs chariots de transport (1), la liaison transversale avant (19a) de la plate-forme (18) est située à une distance du châssis de roulement (4) du propre chariot de transport ou de l'autre chariot de transport (1).

9. Chariot de transport selon la revendication 1, **caractérisé en ce que** la plate-forme (18) est montée de manière mobile sur deux paliers (25), qui sont disposés soit au niveau des coudes (8), soit sur les parties (12) guidées en inclinaison vers le bas.

10. Chariot de transport selon la revendication 1, **caractérisé en ce que** les points d'appui (21) sont formés par des coussinets, qui sont réalisés en matière plastique élastique.

11. Chariot de transport selon la revendication 1, **caractérisé en ce que** la face supérieure de la plate-forme (18) est montée à au moins 250 mm au-dessus du sol.
